# EUROPEAN PATENT APPLICATION

(11) **EP 3 597 868 A1**
(43) Date of publication of application: **22.01.2020**
(21) Application number: 19186854.6
(22) Date of filing: 17.07.2019
(51) Int. Cl.: F01D 9/06, F01D 11/00, F16C 33/04

(54) **SEALING CONFIGURATION USING A BOOT SEAL TO REDUCE AIR LEAKAGE**

(30) Priority: 17.07.2018 US 201816037270
(71) Applicant: United Technologies Corporation, Farmington, CT 06032 (US)
(72) Inventor: DUNNIGAN, Rebecca R., Sturbridge, MA Massachusetts 01566 (US); BUNTING, Billie W., Colchester, CT Connecticut 06415 (US); GUEVEL, Ted, West Harford, CT Connecticut 06119 (US); GREENBERG, Randall Lee, Oxford, CT Connecticut 06478 (US)
(74) Representative: Dehns

(57) **Abstract**

A seal assembly (230) for a fluid transfer tube (250) in a gas turbine engine (100) includes a boot seal (232) configured to surround a length of the fluid transfer tube (250), the boot seal (232) having a first end and a second end and a seal ring (234) disposed at the first end, an attachment ring (236) configured to mate with the seal ring (274) and to secure the seal ring (234) against a casing (224), an annular ring (260, 262) configured to mate with an interior surface of the boot seal (232) at the second end and to surround a portion of the fluid transfer tube (250), and a clamp ring (272) configured to surround the second end of the boot seal (232) proximate the annular ring (260, 262).

## Description

### FIELD

The present disclosure relates generally to gas turbine engines and, more particularly, to bleed air systems used within gas turbine engines and the fluid transfer tubing used therein.

### BACKGROUND

Gas turbine engines, such as those used to provide thrust to an aircraft, are internal combustion engines that use air as the working fluid. In general, the gas turbine engines include a fan section and a core engine located downstream of the fan section. Air from the fan section generally passes through a bypass duct for generating thrust or through the core engine for generating power used to drive the fan. The core engine generally includes a compressor section, one or more combustors, and a turbine section. During operation, air is drawn into the fan section and accelerated by rotating fan blades. A fraction of the indrawn air is routed through the core engine, where it is compressed and pressurized by rotating blades of the compressor section before entering the combustor section. In the combustor section, the air is combusted with fuel to generate hot combustion gases. The hot combustion gases expand through and drive the turbine section, which extracts energy from the gases to power the compressor and fan sections. The hot gases are then expelled through an exhaust nozzle.

### SUMMARY

According to a first aspect of the present invention, there is provided a seal assembly for a fluid transfer tube in a gas turbine engine. The seal assembly includes a boot seal configured to surround a length of the fluid transfer tube, the boot seal having a first end and a second end and a seal ring disposed at the first end, an attachment ring configured to mate with the seal ring and to secure the seal ring against a casing, an annular ring configured to mate with an interior surface of the boot seal at the second end and to surround a portion of the fluid transfer tube, and a clamp ring configured to surround the second end of the boot seal proximate the annular ring.

In an embodiment of the above, the boot seal is constructed of an elastomeric material.

In a further embodiment of any of the above, the attachment ring is constructed of a metallic material.

In a further embodiment of any of the above, the annular ring is constructed of one of an aluminum alloy and a titanium alloy.

In a further embodiment of any of the above, the annular ring comprises a first split ring and a second split ring.

In a further embodiment of any of the above, a set screw is configured to secure the first split ring to the second split ring.

In a further embodiment of any of the above, both the seal ring and the attachment ring include a plurality of holes extending there through and configured for attaching the boot seal to the casing via a plurality of bolts.

In a further embodiment of any of the above, a wear sleeve is configured to surround a portion of the fluid transfer tube.

In a further embodiment of any of the above, the wear sleeve is configured to surround a thermal insulation sleeve disposed between the portion of the fluid transfer tube and the wear sleeve.

According to another aspect of the present invention, there is provided a transfer tube assembly for a gas turbine engine. The transfer tube assembly includes a fluid transfer tube configured to extend through a casing, a boot seal configured to surround a length of the fluid transfer tube, the boot seal having a first end and a second end and a seal ring disposed at the first end, an attachment ring configured to mate with the seal ring and to secure the seal ring against the casing, an annular ring configured to mate with an interior surface of the boot seal at the second end and to surround a portion of the fluid transfer tube, and a clamp ring configured to surround the second end of the boot seal proximate the annular ring.

In an embodiment of the above, a thermal insulation sleeve is positioned between the fluid transfer tube and the annular ring.

In a further embodiment of any of the above, a wear sleeve is positioned between the thermal insulation sleeve and the annular ring.

In a further embodiment of any of the above, the annular ring comprises a first split ring and a second split ring.

In a further embodiment of any of the above, a set screw is configured to secure the first split ring to the second split ring.

According to another aspect of the present invention, there is provided a bleed air assembly for a gas turbine engine is disclosed. The bleed air assembly includes a fluid transfer tube configured to provide compressed air from a compressor to a component external to the compressor, the fluid transfer tube having a tube portion configured to extend through a casing, a boot seal configured to surround a length of the tube portion, the boot seal having a first end and a second end and a seal ring disposed at the first end, an attachment ring configured to mate with the seal ring and to secure the seal ring against the casing, an annular ring configured to mate with an interior surface of the boot seal at the second end and with an exterior surface of the tube portion, and a clamp ring configured to surround the second end of the boot seal proximate the annular ring.

In an embodiment of the above, the boot seal is constructed of an elastomeric material configured to expand or contract in response to movement of the tube portion with respect to the casing.

In a further embodiment of any of the above, a thermal insulation sleeve is positioned between the tube portion and the annular ring.

In a further embodiment of any of the above, a wear sleeve positioned between the tube portion and the annular ring.

In a further embodiment of any of the above, the annular ring comprises a first split ring and a second split ring.

In a further embodiment of any of the above, a set screw configured to secure the first split ring to the second split ring.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B are schematic side and axial cross-sectional views, respectively, of a gas turbine engine, in accordance with various embodiments; and
FIGS. 2A and 2B are schematic assembled and exploded perspective views, respectively, of a transfer tube assembly having a sealing assembly, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

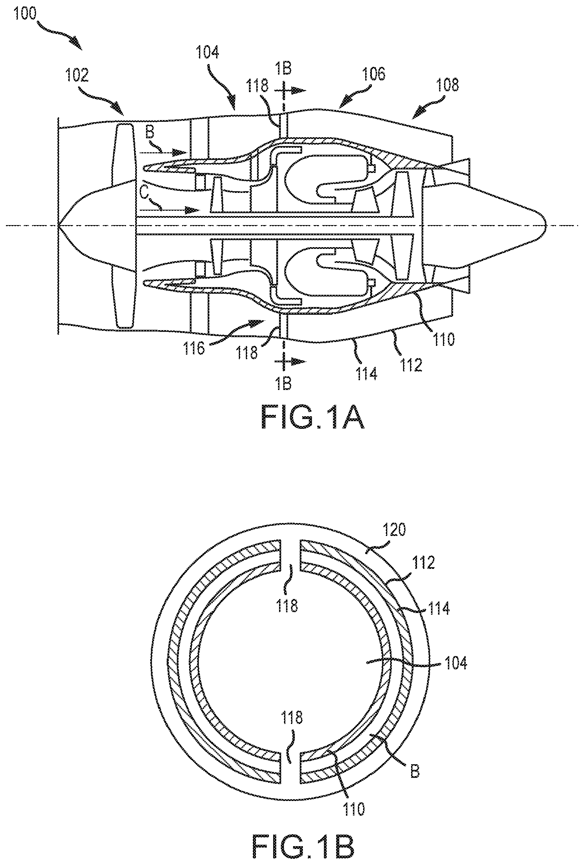

Referring now to the drawings, FIGS. 1A and 1B schematically illustrate a gas turbine engine 100, in accordance with various embodiments. The gas turbine engine 100 is disclosed herein as a two-spool turbofan that generally incorporates a fan section 102, a compressor section 104, a combustor section 106 and a turbine section 108. Alternative engines might include an augmenter section (not shown) among other systems or features. The fan section 102 drives air along a bypass duct or flow path B in a bypass duct defined between a core engine outer casing 110 and an outer bypass duct casing 112, which may also be referred to as an inner nacelle casing 114. The compressor section 104 drives air along a primary or core flow path C for compression and communication into the combustor section 106 and then expansion through the turbine section 108. Although depicted as a two-spool turbofan gas turbine engine in the disclosed nonlimiting embodiment, it will be understood that the concepts described herein are not limited to use with two-spool turbofans as the teachings may be applied to other types of turbine engines, including single-spool and three-spool architectures.

Referring still to FIGS. 1A and 1B, the gas turbine engine 100 also includes a bleed air system 116, used to bleed air from points within the compressor section 104 to other components within the gas turbine engine 100. In various embodiments, the bleed air system 116 includes one or more transfer tube assemblies 118. In general, transfer tube assemblies, such as the one or more transfer tube assemblies 118 just referred, are used to transport bleed air or other fluids, such as fuel or hydraulic fluid, from one component of the gas turbine engine 100 to another. In various embodiments, the one or more transfer tube assemblies 118 may be used in conjunction with the bleed air system 116 to transport bleed air from points within the compressor section 104 to points within a nacelle 120, passing first through the core engine outer casing 110, through the bypass duct or flow path B, and then through the outer bypass duct casing 112 or inner nacelle casing 114 for further transport to points within the nacelle 120 of the gas turbine engine 100. While transport of bleed air from the compressor section 104 to the nacelle 120 is described above and herein, the disclosure contemplates transport of other fluids, such as fuels and lubricants and not simply air, from various points within the gas turbine engine 100 to other points within the engine.

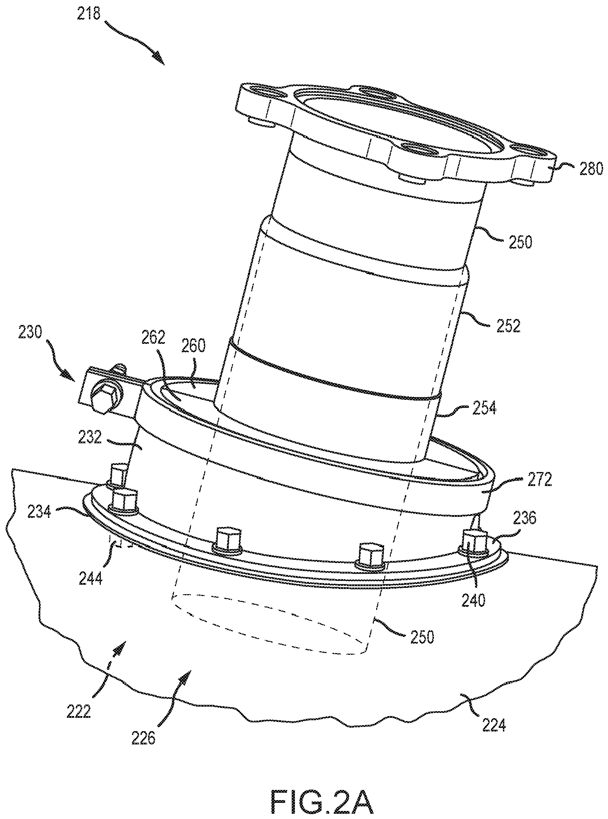

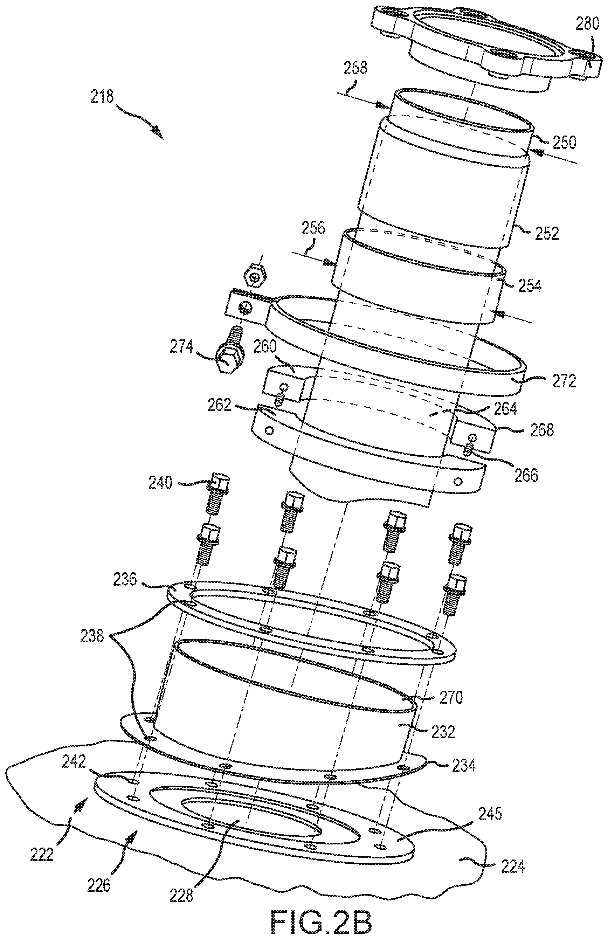

Referring now to FIGS. 2A and 2B, a transfer tube assembly 218, such as, for example, one of the one or more transfer tube assemblies 118 described above with reference to FIGS. 1A and 1B, is illustrated in assembled and exploded form. In various embodiments, the transfer tube assembly 218 includes a sealing assembly 230 configured to reduce or minimize leakage of fluid being transported from an inner side 222 of a casing 224 to an outer side 226 of the casing 224. In various embodiments, the transfer tube assembly 218 further includes a fluid transfer tube 250 that typically extends from the inner side 222 of the casing 224 to the outer side 226 of the casing 224 via an aperture 228 that extends through the casing 224. In various embodiments, the fluid transfer tube 250 may float within the sealing assembly 230 or be fixed to structure or componentry existing within a chamber or cavity defined by the inner side 222 of the casing 224.

In various embodiments, the sealing assembly 230 comprises a boot seal 232 having a seal ring 234 extending about a circumferential base portion of the boot seal 232. In various embodiments, the boot seal 232 and the seal ring 234 form a unitary component constructed from a molded rubber or elastomeric material, such as, for example, a nitrile rubber, having a high resistance to degradation from heat and from contact with oils, fuels and other chemicals. An attachment ring 236 is sized to substantially mirror the annular geometry of the seal ring 234 and to secure the seal ring 234 to the outer surface 226 of the casing 224. In various embodiments, both the seal ring 234 and the attachment ring 236 include a plurality of holes 238, each of which is configured to receive one of a plurality of bolts 240. Each of the plurality of bolts 240 is received by a corresponding one of a plurality of threaded apertures 242 that are positioned through the casing 224 or that comprise captured nuts 244 positioned on the inner side 222 of the casing 224. Following assembly, the seal ring 234 of the boot seal 232 is positioned on the outer surface 226 of the casing 224 and disposed between the outer surface 226 and the attachment ring 236, with the plurality of bolts 240 tightly securing the seal ring 234 to the casing 224 via the plurality of threaded apertures 242. In various embodiments, a plate 245 may be secured to one or both of the inner surface 222 and the outer surface 226 of the casing 224 to provide additional strength and support to the casing 224 for securing the seal ring 234 thereto.

Still referring to FIGS. 2A and 2B, the sealing assembly 230 is configured to engage a wear sleeve 254 that surrounds a thermal insulation sleeve 252. In various embodiments, the thermal insulation sleeve 252 is sized to slide over the fluid transfer tube 250 and the wear sleeve 254 is sized to slide over the thermal insulation sleeve 252. In various embodiments, the sealing assembly 230 further includes a first split ring 260 and a second split ring 262. In various embodiments, the first split ring 260 and the second split ring 262 have an inner circumference 264 that is sized to match an outer circumference 256 of the wear sleeve 254. During assembly, the thermal insulation sleeve 252 is slid over the fluid transfer tube 250 and the wear sleeve 254 is slid over the thermal insulation sleeve 252. The first split ring 260 and the second split ring 262 are positioned about the wear sleeve 254 and secured to the wear sleeve 254, in various embodiments, by one or more set screws 266. In various embodiments, where the thermal insulation sleeve 252 is not used, the wear sleeve 254 may be sized to fit directly to the fluid transfer tube 250 and assembled as above described. However, in various embodiments where neither the thermal insulation sleeve 252 nor the wear sleeve 254 is used, the first split ring 260 and the second split ring 262 may be sized such that the inner circumference 264 is sized to match an outer circumference 258 of the fluid transfer tube 250, thereby obviating the need for both the thermal insulation sleeve 252 and the wear sleeve 254. In various embodiments, the first split ring 260 and the second split ring 262 may comprise a single, monolithic structure - *e.g.,* an annular ring - that is configured for friction fit against the wear sleeve 254, if present, or the transfer tube 250, if the wear sleeve 254 and thermal insulation sleeve 252 are not present.

Following or during attachment of the first split ring 260 and the second split ring 262 to the wear sleeve 254 (or to the fluid transfer tube 250) as above described, an outer cylindrical surface 268 of the split rings is mated to an inner cylindrical surface 270 of the boot seal 232, either by sliding the first split ring 260 and the second split ring 262, once assembled, into the boot seal 232, or by sliding the boot seal 232 about the outer cylindrical surface 268 of the split rings. A clamp ring 272 is then positioned about the boot seal 232 proximate the first split ring 260 and the second split ring 262, as assembled, and tightened by a bolt 274 or other suitable manner. Assemblage of the sealing assembly 230 and the transfer tube assembly 218 is complete at this point. In various embodiments, the first split ring 260, the second split ring 262 and the clamp ring 272 may be constructed of lightweight but high strength materials, such as, for example, aluminum, aluminum alloys, titanium or titanium alloys. In various embodiments, a flange 280 may be positioned on a second end of the fluid transfer tube 250 for attachment to a related component of a fluid transport system.

When constructed and assembled as above described, the boot seal 232, constructed of a flexible material, will provide sufficient flexibility to enable the fluid transfer tube 250, together with the thermal insulation sleeve 252 and wear sleeve 254, if present, to translate in three dimensions with respect to the casing 224 in response to vibratory loads, high temperatures or differential thermal growth. Thus, the transfer tube assembly 218 may experience axial, radial or circumferential deflections, due to various thermal or mechanical sources, for longer periods of time or accumulated cycles of use without the fluid transfer components experiencing material fatigue. In addition, the construction and assembly disclosed herein enables the transfer tube assembly 218 to be assembled about the fluid transfer tube 250 having a flange, such as, for example, the flange 280 above described, that is non-removable from the fluid transfer tube 250 because of its attachment to the tube through welding or other permanent or semi-permanent manner of attachment. In various embodiments, for example, the first split ring 260 and the second split ring 262, rather than being slid over the fluid transfer tube 250, as would be required for a unitary or monolithic ring, are secured to each other about the tube as above described and fastened to one another using the one or more set screws 266. This feature of the disclosure enables replacement of the boot seal 232 and the related components without requiring removal of the flange.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A seal assembly (230) for a fluid transfer tube (250) in a gas turbine engine (100), the seal assembly (230) comprising:
a boot seal (232) configured to surround a length of the fluid transfer tube (250), the boot seal (232) having a first end and a second end and a seal ring (234) disposed at the first end;
an attachment ring (236) configured to mate with the seal ring (234) and to secure the seal ring (234) against a casing (224);
an annular ring (260, 262) configured to mate with an interior surface of the boot seal (232) at the second end and to surround a portion of the fluid transfer tube (250); and
a clamp ring (272) configured to surround the second end of the boot seal (232) proximate the annular ring (260, 262).

2. The seal assembly (230) of claim 1, wherein the boot seal (232) is constructed of an elastomeric material.

3. The seal assembly (230) of claim 1 or 2, wherein the attachment ring (236) is constructed of a metallic material.

4. The seal assembly (230) of any preceding claim, wherein the annular ring (260,262) is constructed of a metallic material, such as an aluminum alloy and/or a titanium alloy.

5. The seal assembly (230) of any preceding claim, wherein the annular ring (260, 262) comprises a first split ring (260) and a second split ring (262).

6. The seal assembly (230) of claim 5, further comprising a set screw (266) configured to secure the first split ring (260) to the second split ring (262).

7. The seal assembly (230) of any preceding claim, wherein both the seal ring (234) and the attachment ring (236) include a plurality of holes (238) extending therethrough for attaching the boot seal (232) to the casing (224) via a plurality of bolts (240).

8. The seal assembly (230) of any preceding claim, further comprising a wear sleeve (254) configured to surround the portion of the fluid transfer tube (250).

9. The seal assembly (230) of claim 8, wherein the wear sleeve (254) is configured to surround a thermal insulation sleeve (252) disposed between the portion of the fluid transfer tube (250) and the wear sleeve (254).

10. A transfer tube assembly (218) for a gas turbine engine (100), the transfer tube assembly (218) comprising:
the seal assembly (230) of any of claims 1 to 7; and
a fluid transfer tube (250) configured to extend through the casing (224).

11. The transfer tube assembly (218) of claim 10, further comprising a thermal insulation sleeve (252) positioned between the fluid transfer tube (250) and the annular ring (260, 262), optionally further comprising a wear sleeve (254) positioned between the thermal insulation sleeve (252) and the annular ring (260, 262).

12. A bleed air assembly (116) for a gas turbine engine (100), the bleed air assembly (116) comprising:
the transfer tube assembly (218) of claim 10; and
a fluid transfer tube (250) configured to provide compressed air from a compressor (104) to a component external to the compressor (104), the fluid transfer tube (250) having a tube portion configured to extend through the casing (224), and the annular ring (260, 262) configured to mate with an exterior surface of the tube portion.

13. The bleed air assembly (116) of claim 12, wherein the boot seal (232) is constructed of an elastomeric material configured to expand or contract in response to movement of the tube portion with respect to the casing.

14. The bleed air assembly (116) of claim 12 or 13, further comprising a thermal insulation sleeve (252) positioned between the tube portion and the annular ring (260, 262).

15. The bleed air assembly (116) of claim 12, 13 or 14, further comprising a wear sleeve (254) positioned between the tube portion and the annular ring (260, 262).
